# EUROPEAN PATENT APPLICATION

(11) **EP 1 770 802 A1**
(43) Date of publication of application: **04.04.2007**
(21) Application number: 06254880.5
(22) Date of filing: 20.09.2006
(51) Int. Cl.: H01M 2/10

(54) **Universal battery**

(30) Priority: 20.09.2005 GB 0519104
(71) Applicant: Strax UK Ltd., St. ALbans Hertfordshire AL2 2DQ (GB)
(72) Inventor: Olafsson, Petur Hannes, St. Albans, Hertfordshire AL1 3XT (GB); Birgisson, Jon Ottar, St. Albans, HErtfordshire AL3 5LN (GB)
(74) Representative: Midgley, Jonathan Lee

(57) **Abstract**

A universal battery assembly operable to fit and supply power to a plurality of electronic devices having different shapes and sizes. The battery assembly has a chargeable power supply cell and at least one extension means for attachment to the cell. The battery assembly may also include several extension means having different shapes and sizes for interchangeable use with many different electronic devices.

## Description

The present invention generally relates to a universal battery assembly that is adaptable to fit a wide range of portable electronic devices of different shapes and sizes, for example mobile phones.

There are an increasing number of makes and models of portable electronic equipment on the market. This particularly applies to mobile phones, which are becoming smaller at the same time as the range of designs and shapes is becoming more diverse. Each mobile phone manufacturer produces a wide range of designs of phone of varying dimensions, which means that even the range of phones made by a single manufacturer will require several different battery shapes and sizes. This is inconvenient and costly for manufacturers, who must manufacture different batteries every time a new model of mobile phone or other portable electronic device is produced. It also presents a problem for retail outlets of electronic equipment, which must stock a wide range of batteries having different shapes and sizes, which take up a large amount of retail space.

Therefore, it would be desirable to have one battery that fits many makes and models of electronic equipment.

Thus one aspect of the present invention provides a battery assembly adaptable to be fitted into one of a plurality of electronic devices, comprising: a cell; and at least one extension means, the extension means being attachable to the cell for increasing one or more dimensions of the battery when the at least one extension means is attached to the cell.

The extension means can be removably attachable to the cell and several extension means can be provided that are removably attachable to each other.

This means that the battery assembly is adaptable to fit many models of electronic devices by reducing or increasing the size of the battery assembly according to requirements.

The cell can be generally planar or flat. Electrical contacts are preferably provided at one end for connection to electrical contacts in an electronic device to supply power to the electronic device. Extension means can then be attached to the cell at the other end of the cell and/or on one or both of a first face and a second face of the cell and/or on one or both peripheral edges of the cell. This allows the length, thickness and width of a single cell to be adjusted to suit a large number of applications.

The extension means can be of any shape and size so as to allow the cell to be used in any portable electronic device. Many different shapes and sizes of extension means can be supplied with the battery assembly. For example, the extension means and cell can both be of a substantially cuboid shape.

The extension means could include a recess portion on the side where it is not attached to the cell, with the remaining portion forming "legs", which are able to fit into the space provided in an electronic device for the battery that is not occupied by the cell, to restrain the battery assembly within the space. This provides an extension with minimum weight and cost.

In this way the battery assembly can be extended in any dimension to fit the shape and size of the electronic device to which it is required to supply power.

The extension means can be attached to the cell and/or to another extension means by a sliding mechanism, e.g. a dovetail joint, so that the extension means is slidably attachable to the cell and/or with another extension means. Alternatively, the extension means can be attached to the cell and/or to another extension means using lugs provided on the extension means adaptable to engage apertures provided in the cell or other extension means. The lugs may be frictionally engageable with the apertures or include a catch mechanism.

The lugs and apertures may be reversed, with the lugs provided on the cell and the apertures on the extender.

The extension means does not have to be attached to the cell and may be adapted just to rest against the cell so as to retain the cell in the space provided in the electronic device.

The extension means may be shaped to extend the cell in two or three dimensions.

Preferably, the extension means engages the cell on a surface other than the surface having the electrical connection.

Preferably the connectors on the cell are not obstructed by the extension means. In other words the extension means is attached on part of the cell separate from the connectors.

Thus the present invention provides the advantage of a battery assembly that can be adapted to be used with a plurality of different electronic devices.

An example of an embodiment of the invention will now be described in detail with reference to the accompanying drawings in which:
Figure 1 is a front view of a battery assembly according to a first embodiment of the present invention;
Figure 2 is an exploded front view of a battery assembly according to a first embodiment of the present invention;
Figure 3 is an exploded side view of a battery assembly according to a first embodiment of the present invention;
Figure 4 is an exploded front view of a battery assembly according to a second embodiment of the present invention;
Figure 5 is a front view of a battery assembly according to a third embodiment of the present invention;
Figure 6 is an end view of a battery assembly according to a fourth embodiment of the present invention;
Figure 7 is a perspective view of a battery assembly according to a first embodiment of the present invention;
Figure 8 is a perspective view of a battery assembly according to a second embodiment of the present invention; and
Figure 9 is a view showing some of the optional ways of connecting extensions.

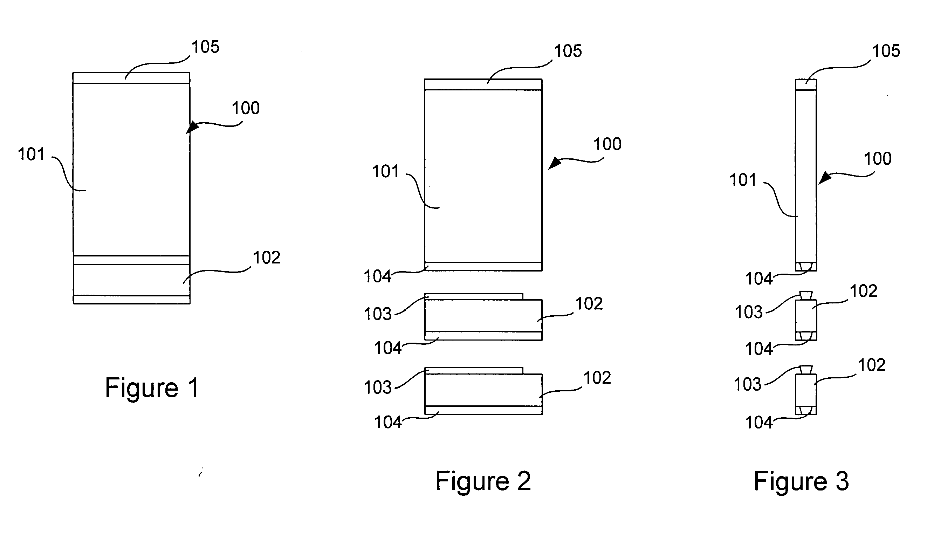

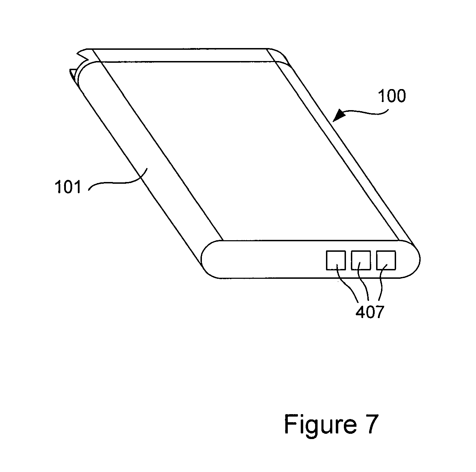

Figure 7 shows a battery assembly 100 according to a first embodiment of the present invention. The assembly has a generally planar cuboid cell 101 for supplying power to an electronic device such as a mobile phone. The cell 101 is suitable for supplying charge to an electronic device and can be rechargeable by known charging means, or can be a disposable pre-charged cell. Electrical contacts 407 are provided at one end of the cell so as to supply power from the cell 101 to an electronic device having corresponding electrical contacts. Figure 1 shows a generally cuboid extender 102 attached to the cell 101.

Smaller designs of electronic devices place a limit on the size of conventional cells that can be used to power the device. The cell 101 will have its maximum size determined by the smallest size of electronic device that it is required to power. By attaching the extender 102 to the cell 101, the size of the battery assembly 100 can be increased to fit a larger device.

Figure 2 shows the battery assembly 100 of the first embodiment with the cell 101 and two extenders 102. The figure shows more clearly how the extenders 102 are attached to the cell. Each extender 102 comprises a male fitting 103 and a female fitting 104. The cell 101 also comprises a female fitting 104. The extender 102 may then be removably attached to the cell 101, or to another extender 102, by means of a sliding mechanism comprising a male fitting 103 and a female fitting 104. The male fitting 103 of an extender 102 is adapted to slide into the female fitting 104 of the cell 101, or another extender 102, in a direction perpendicular to the direction in which the dimension of the cell 101 is increased by the extension means 102. Alternatively the fitting 103 may slide into the fitting 104 in a direction parallel to the direction in which the dimension of the cell 101 is increased by the extender 102.

Further extension means 102 may also be slidably attached to and detached from the battery assembly 100 to increase or decrease the effective size of the cell 101 as required.

Figure 3 shows a side view of the battery assembly 100 according to the first embodiment. The sliding mechanism is shown here in more detail and it can be seen that the male fittings 103 and the female fittings 104 are formed with a "dovetail"-type shape. This helps to hold the extender 102 firmly in place to the battery assembly 100 when they are slidably engaged with the cell 101 or with another extender 102. The male fittings 103 and female fittings 104 may be reversed.

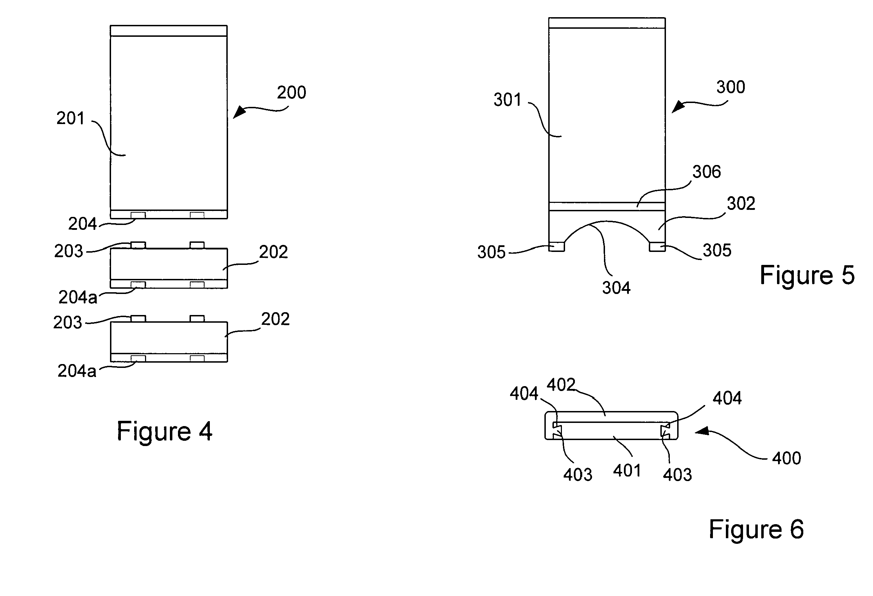

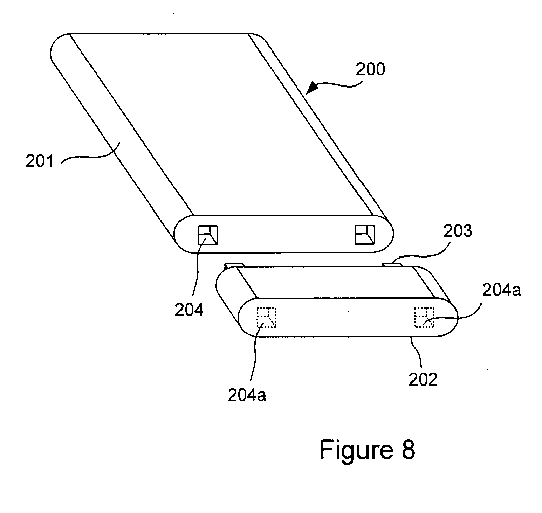

Figure 4 shows a front view of a battery assembly 200 according to a second embodiment of the present invention. The battery assembly 200 comprises a cell 201 having apertures 204. The extension means 202 are provided with pins or lugs 203 and apertures 204a. Figure 8 shows a perspective view of the second embodiment, including the optional additional apertures 204a.

The pins 203 are adapted to engage frictionally with apertures 204 such that the extender 202 can be removably attached to the cell 201. When the extender 202 is attached to the cell 201 it is held firmly in place by the action of frictional forces between the pins 203 and the apertures 204. The apertures 204 may be wider such that each of the pins 203 only engages one end of the aperture 204. The extender 202 may also comprise apertures 204a so that an additional extender 202 may be attached as required to increase or decrease the size of the battery assembly 200 to fit a range of electronic devices of different sizes.

The frictional engagement mechanism of this embodiment is an alternative to the sliding mechanism of the previous embodiment and may be preferred depending on how device manufacturers wish to utilise battery space.

Figure 5 shows a third embodiment with a battery assembly 300 having a cell 301 and an extender 302 attached to the cell 301. The extender 302 has two end pieces 305, a straight side 306 attached to the cell 301 and an arcuate side 304.

The straight side 306 of the extender 302 is removably attached to the cell 301 by either the sliding mechanism or the pin and aperture mechanism described in the previous two embodiments. The maximum length to which the cell 301 can be extended by the extender 302 is defined by the length of the "legs" formed where the arcuate side 304 joins the side edges 305. This shape of extender 302 helps to make the battery assembly more lightweight than the generally cuboid shape of the previous embodiments, while still providing extension of the cell 301 to the required length.

In this embodiment, an arcuate recess is provided. However, it will be appreciated that any kind of recess can be used to minimise the size of the extension means 302. Furthermore, recesses may be provided on the sides of the extender 302. The side edges 305 may be individually extended by attaching separate extenders to each side.

Figure 6 shows an end view of a battery assembly 400 according to a fourth embodiment having a cell 401 and an extension means 402. The extension means 402 has male fittings 403, which are operable to fit female fittings 404 provided in the cell 401.

The fittings 403 and 404 form a sliding mechanism so that the extension means 402 can be slidably engaged with the cell 401. The extender forms a sleeve around the cell 401 to extend the thickness of the cell and the width or length of the cell.

The extension means of this embodiment may be used in conjunction with that of the first, second and/or third embodiments so that all three dimensions of a cell may be increased or decreased as required.

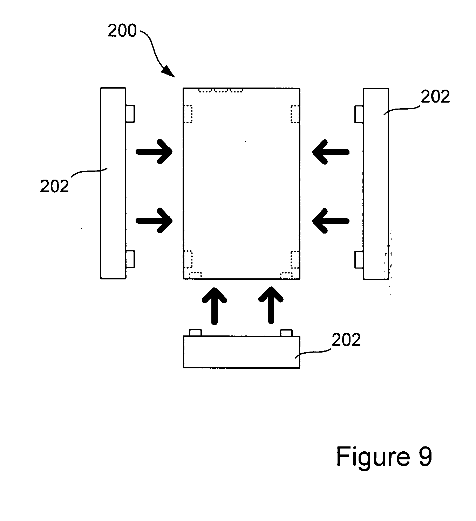

Although the extension means of the first, second and third embodiments have been shown as being attached to the cell at the opposite end of the cell from where the electrical contacts are provided, they may also be attached to the cell on one or both of the sides of the cell. This may be instead of, or in addition to, being attached to the cell at the end. Figure 9 shows how extenders can be attached at the end as well as the sides. Additionally, although not shown, extenders can be attached to the faces to increase the thickness.

The extenders each may be of different shapes and sizes and a battery assembly may be provided with a variety of different extension means.

The extension means do not have to be electrically isolated from the cell. They may comprise circuitry to allow them to be charged and store charge so as to maximise the amount of power that the battery assembly can supply. The extenders may also include electrical conductors or through connectors to connect the external connectors on the cell 407 to extend connectors on the extension means in order to extend the cell at an end having electrical connectors.

Furthermore, the cell does not have to be chargeable and may be a disposable cell provided with charge before use.

Alternatively the cell and extension means may be cylindrical.

The male and female connectors may be reversed so that male connectors are provided in the cell adaptable to fit into female connectors provided on the extenders.

The cell and extenders may be attachable by means of any suitable form of attachment. In addition, it is not necessary for the cell and extenders to be attachable to each other - extenders may rest against the cell without being attached to it so as to extend one or more dimensions of the cell to restrain it in the space provided in an electronic device.

Although the present invention has been described hereinabove with reference to specific embodiments, the present invention is not limited to the specific embodiments and modifications will be apparent to a skilled person in the art which lie within the scope of the present invention as claimed.

## Claims

1. A battery assembly adaptable to be fitted into one of a plurality of electronic devices, comprising:
a cell; and
at least one extension means, the extension means being attachable to the cell for increasing one or more dimensions of the cell when the at least one extension means is attached to the cell.

2. A battery kit adaptable to be fitted into one of a plurality of electronic devices, the kit comprising:
a cell; and
one or more extension means, the extension means being attachable to the cell for increasing one or more dimensions of the cell when at least one of the plurality of extension means is attached to the cell.

3. The battery assembly according to claim 1 or 2, wherein the at least one extension means is removably attachable to the cell.

4. The battery assembly according to any one of claims 1 to 3, wherein the at least one extension means is attachable to another extension means.

5. The battery assembly according to claim 4, wherein the at least one extension means is removably attachable to the another extension means.

6. The battery assembly according to any one of claims 1 to 5, wherein the cell is generally planar having two opposing faces, two opposing ends and two opposing side edges.

7. The battery assembly according to claim 6, further comprising electrical contacts provided at one end of the cell and the at least one extension means being attachable to the cell at the other end of the cell.

8. The battery assembly according to any one of claims 6 to 7, wherein the at least one extension means is attachable to the cell so as to extend one of the opposing faces.

9. The battery assembly according to any one of claims 6 to 8, wherein the at least one extension means is attached to the cell on at least one of the two side edges.

10. The battery assembly according to any one of claims 1 to 5, wherein the cell is generally cylindrical.

11. The battery assembly according to any one of claims 1 to 10, wherein the at least one extension means is slidably attachable to the cell.

12. The battery assembly according to claim 11, wherein the at least one extension means is slidably attachable to the cell in a direction substantially perpendicular to a direction of extension of the plane of the cell.

13. The battery assembly according to claim 12, wherein the at least one extension means is slidably attachable to the cell in a direction substantially parallel with a direction of extension of the plane of the cell.

14. The battery assembly according to any one of claims 1 to 10, wherein the at least one extension means comprises at least one lug adapted to be attachable with a corresponding at least one aperture provided in the cell.

15. The battery assembly according to any one of claims 1 to 14, wherein a cross-sectional plane of the at least one extension means is substantially in registration with a corresponding cross-sectional plane of the cell.

16. The battery assembly according to any one of claims 1 to 15, wherein a side of the at least one extension means that is not attachable to the cell is recessed.

17. The battery assembly according to any one of claims 1 to 16, wherein the at least one extension means includes electrical conductors operable to connect the external electrical connectors provided on the cell to electrical contacts provided in the one of a plurality of electronic devices, so as to extend the cell at an end having electrical connectors.

18. The battery assembly according to any one of claims 1 to 16, wherein the at least one extension means is electrically isolated from the cell.

19. An extension means for use with a cell, the extender being attachable to said cell for increasing one or more dimensions of the cell when the extension means is attached to the cell.

20. The extension means according to claim 19, further comprising attachment means.

21. The extension means according to claim 20, wherein the attachment means is operable to allow the extension means to be removably attachable to the cell.

22. The extension means according to claim 20 or claim 21, wherein the attachment means is operable to allow the extension means to be removably attachable to another extension means.

23. The extension means according to any one of claims 20 to 22, wherein the attachment means comprises a sliding mechanism.

24. The extension means according to any one of claims 20 to 22, wherein the attachment means comprises at least one lug adapted to be attachable with a corresponding at least one aperture provided in the cell.

25. The extension means according to any one of claims 20 to 24, wherein a side of the extension means that is not attached to the cell is recessed.

26. The extension means according to any one of claims 20 to 25, further comprising electrical conductors.

27. The extension means according to any one of claims 20 to 25, wherein the extension means is electrically isolated from the cell.
